# DEMANDE DE BREVET EUROPEEN

(11) **EP 3 495 748 A1**
(43) Date de publication de la demande: **12.06.2019**
(21) Numéro de dépôt: 18210213.7
(22) Date de dépôt: 04.12.2018
(51) Int. Cl.: F24F 13/20, F24F 13/08, F24F 7/007, F24F 11/72, H02K 9/06

(54) **CAISSON DE VENTILATION MUNI D'UNE CHICANE EN AMONT**

(30) Priorité: 05.12.2017 FR 1761665
(71) Demandeur: Astato, 93155 Le Blanc Mesnil (FR)
(72) Inventeur: AMPHOUX, André, 75012 Paris (FR); LUCET, Alexandre, 77420 Champs sur Marne (FR)
(74) Mandataire: Derambure Conseil

(57) **Abrégé**

L'invention concerne un caisson de ventilation (1) comportant un premier compartiment (10) destiné à recevoir un moto-ventilateur (90) apte à aspirer de l'air extérieur au caisson (1). Le caisson (1) comporte en outre un deuxième compartiment (20) en amont du premier compartiment (10) et séparé du premier compartiment (10) et comportant une entrée d'air (21) débouchant sur l'extérieur du caisson (1) et une sortie d'air (22) communiquant avec le premier compartiment (10), le deuxième compartiment (20) étant conformé pour dévier le flux d'air destiné à être aspiré par le moto-ventilateur (90) dans son trajet au travers du deuxième compartiment (20) entre l'entrée d'air (21) et la sortie d'air (22).

## Description

La présente invention concerne un caisson de ventilation comportant un premier compartiment destiné à recevoir un moto-ventilateur apte à aspirer de l'air.

Dans la description qui suit les termes "amont" et "aval" sont définis par rapport au sens de circulation normal de l'air au travers du caisson de ventilation.

Dans un bâtiment, l'évacuation de l'air vicié et des produits de combustion est indispensable. Cette évacuation s'effectue par extraction de l'air vers l'extérieur du bâtiment, par l'intermédiaire d'un conduit d'évacuation débouchant sur l'extérieur. En particulier, cette extraction peut être assistée par induction d'air pour pallier au manque de tirage thermique naturel et de vent. Cette induction consiste à injecter en partie finale de ce conduit d'évacuation un jet d'air à grande vitesse, dans le même sens que le flux d'air sortant du bâtiment. La viscosité de l'air de ce jet d'air entraine l'air à extraire du bâtiment, créant une dépression dans le conduit d'évacuation. Cette dépression contribue à entrainer davantage d'air vers l'extérieur du bâtiment et permet de pallier la déficience du tirage thermique

Pour injecter et entretenir ce jet d'air à grande vitesse, on utilise un moto-ventilateur comprenant un moteur électrique et une turbine entrainée par ce moteur. Cet ensemble est placé dans un caisson de ventilation, qui est en général situé sur le toit du bâtiment. Ce caisson est destiné à protéger le moto-ventilateur des intempéries. Ce caisson comprend une entrée pour l'air destiné à être aspiré par le moto-ventilateur, et une sortie d'air pour le rejet de cet air par le moto-ventilateur vers le réseau d'air primaire en aval du caisson.

Avantageusement, le caisson comprend également une admission et une éjection d'air pour une circulation d'air dans le caisson autour du moto-ventilateur, afin de refroidir ce dernier. Cette admission d'air peut être séparée ou être la même que l'entrée d'air pour alimentation du moto-ventilateur.

Afin d'éviter que des poussières, particules, voire humidité, présents dans l'environnement, ne pénètrent dans le moto-ventilateur, un filtre est situé entre l'entrée d'air d'aspiration et le moto-ventilateur, sur le trajet de l'air aspiré par le moteur. Ce filtre nécessite bien entendu d'être changé régulièrement et remplacé par un filtre propre.

Cependant, en pratique, les sociétés de maintenance, chargées de l'entretien du caisson de ventilation et du remplacement de ces filtres, soit attendent trop longtemps avant d'effectuer cette opération de maintenance, soit ne l'effectuent pas du tout.

En conséquence, au bout d'un certain temps le moto-ventilateur fonctionne avec un filtre encrassé, qui ne laisse donc plus passer d'air.

Il en résulte une perte de charge en amont du moto-ventilateur dont la turbine (roue) va s'échauffer en tentant d'aspirer l'air nécessaire pour un fonctionnement correct.

De plus, la turbine du moto-ventilateur aspire alors de l'air par d'autres orifices, en particulier l'orifice qu'emprunte l'air destiné à refroidir le moteur, par son entrée ou sa sortie du caisson. Cet air n'étant pas filtré, entraine des particules et poussières dans la turbine, ce qui encrasse la turbine et conduit à son échauffement. En outre, puisque les orifices empruntés par l'air aspiré sont principalement les orifices réservés au refroidissement du moto-ventilateur, l'air chaud généré par le moteur ne peut plus s'évacuer. En conséquence le moto-ventilateur s'échauffe encore davantage, créant une dilatation des aubes de la roue qui vont venir frotter sur le carter, provoquant ainsi la détérioration voire la destruction du moto-ventilateur

D'une manière générale, ce problème d'endommagement du moto-ventilateur se retrouve sur tout caisson de ventilation dans lequel un moto-ventilateur aspire de l'air provenant de l'extérieur du caisson et contenant des impuretés. Par exemple, le caisson de ventilation peut être utilisé pour directement alimenter une pièce en air extérieur, par exemple en coopération avec un échangeur double-flux qui extrait en parallèle de l'air de cette pièce pour le rejeter vers l'extérieur.

La présente invention vise à remédier à ces inconvénients.

L'invention vise à proposer un caisson de ventilation qui permette de diminuer, voire supprimer l'échauffement indésirable du moteur.

Ce but est atteint grâce au fait que le caisson de ventilation comporte en outre un deuxième compartiment en amont et séparé du premier compartiment, comportant une entrée d'air débouchant sur l'extérieur du caisson et une sortie d'air débouchant sur le premier compartiment, le deuxième compartiment étant conformé pour dévier le flux d'air destiné à être aspiré par le moto-ventilateur dans son trajet au travers du deuxième compartiment entre l'entrée d'air et la sortie d'air.

Grâce à ces dispositions, le flux d'air qui traverse le deuxième compartiment est ralenti, permettant aux particules, poussière, et humidité présentent dans le flux d'air de se déposer le long des parois du deuxième compartiment. En conséquence, l'air qui pénètre dans le moto-ventilateur est plus propre et compatible avec la capacité de la turbine à fonctionner correctement avec cette qualité d'air.

Avantageusement, le deuxième compartiment comporte une chicane intérieure qui est disposée pour réaliser la déviation du flux d'air dans son trajet au travers du deuxième compartiment.

Avantageusement, l'entrée d'air et la sortie d'air du deuxième compartiment sont disposées de telle sorte que le deuxième compartiment forme une chicane qui réalise une déviation du flux d'air dans son trajet au travers du deuxième compartiment.

Avantageusement, le caisson comporte en outre un dispositif de variation de fréquence du moteur du moto-ventilateur.

Ainsi, la vitesse (fréquence) du moteur est régulée en fonction de l'assistance nécessaire à l'extraction de l'air vicié du bâtiment. Le fonctionnement du moto-ventilateur est ainsi optimisé.

Avantageusement, le dispositif de variation de fréquence est situé à l'extérieur du caisson.

Ainsi, la maintenance de ce dispositif de variation de fréquence est facilitée, car il n'est pas nécessaire d'ouvrir le caisson pour réaliser cette maintenance.

Avantageusement, le caisson est exempt de filtre amovible en amont du moto-ventilateur sur le trajet de l'air aspiré.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en perspective d'un caisson de ventilation selon un premier mode de réalisation de l'invention ;
- la figure 2 est une vue de dessus du caisson de ventilation de la figure 1 ;
- la figure 3 est une vue en perspective d'un caisson de ventilation selon un deuxième mode de réalisation de l'invention ;
- la figure 4 est une autre vue en perspective du caisson de ventilation de la figure 3 ;
- la figure 5 est une vue de dessus d'un caisson de ventilation selon un troisième mode de réalisation de l'invention ;
- la figure 6 est une vue de côté du caisson de ventilation de la figure 5.

Dans la description ci-dessous, l'axe X désigne l'axe longitudinal du moto-ventilateur 90 qui est également son axe de rotation. L'axe X est horizontal.

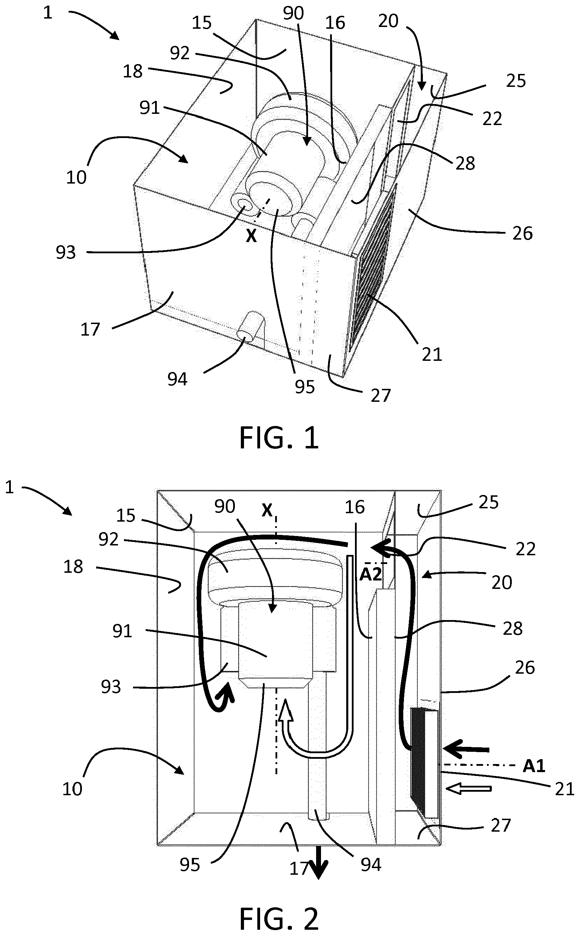

La figure 1 montre un caisson de ventilation 1 selon un premier mode de réalisation de l'invention. Par exemple, le caisson de ventilation 1 est utilisé pour injecter de l'air dans le conduit d'évacuation d'air d'un bâtiment, afin d'assister l'évacuation de cet air par induction, comme expliqué ci-dessus.

Cet air est ci-dessous qualifié « air d'injection » (par opposition à l'air de refroidissement du moto-ventilateur (voir ci-dessous)).

Le caisson de ventilation 1 comporte un premier compartiment 10 destinée à recevoir un moto-ventilateur 90. Le moto-ventilateur 90 comprend un moteur 91 et une turbine 92 qui est entrainé par ce moteur 91 et qui injecte l'air d'injection dans le conduit d'évacuation d'air du bâtiment. Un ventilateur 95 est en outre fixé sur l'arbre de rotation du moteur 91, et situé à l'arrière (en amont) du moto-ventilateur 90. En fonctionnement, le ventilateur 95 aspire de l'air provenant de l'extérieur du caisson 1, afin de l'amener dans le premier compartiment 10 et également de le faire circuler autour du moto-ventilateur 90 pour assurer son refroidissement.

Le premier compartiment 10 comporte une paroi avant 15, une paroi arrière 17, et deux parois latérales 16 et 18. L'axe longitudinal X traverse la paroi avant et la paroi arrière 15. Le tuyau d'admission 93 d'air d'injection dans le moto-ventilateur 90 est orienté selon l'axe longitudinal X et dirigée vers la paroi arrière 17, de telle sorte que l'air d'injection entre par le tuyau d'admission 93 d'entrée d'air en circulant depuis la paroi arrière 17 vers la paroi avant 15.

Un tuyau d'éjection 94 éjecte l'air passé dans le moto-ventilateur 90 directement à l'extérieur du caisson 1, le tuyau d'éjection 94 traversant la paroi arrière 17.

Le caisson comporte en outre un deuxième compartiment 20 séparé du premier compartiment 10, distinct du premier compartiment 10.

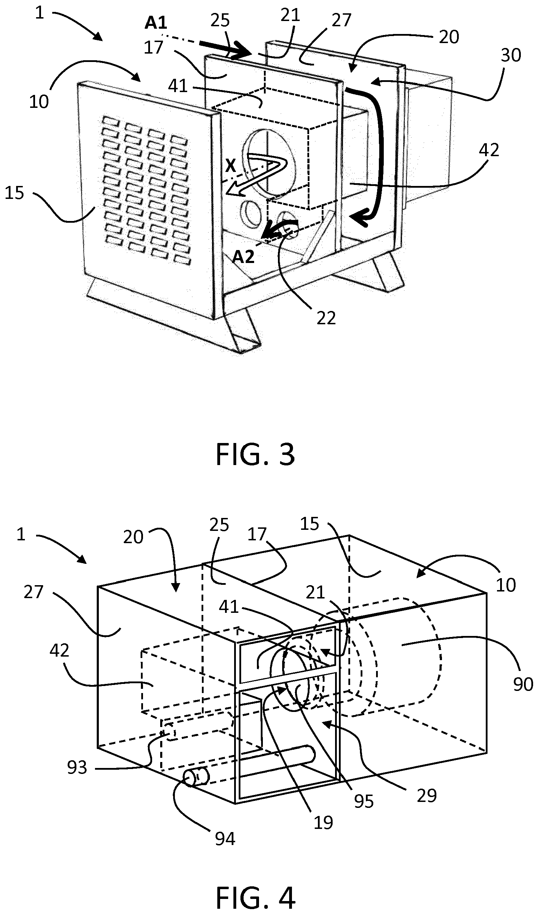

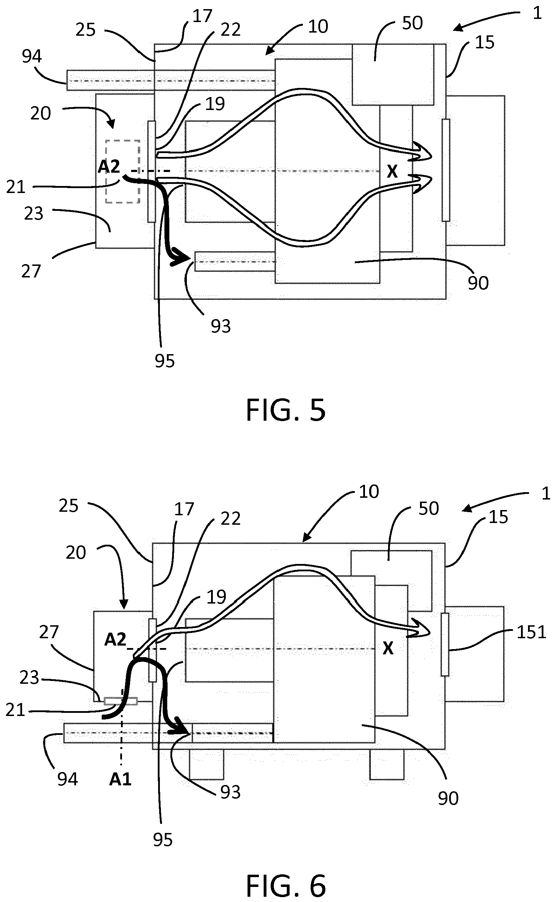

Le deuxième compartiment 20 est situé en amont du premier compartiment 10 dans le sens normal de circulation de l'air en fonctionnement normal du moto-ventilateur. Le deuxième compartiment 20 comporte une entrée d'air d'injection 21 qui débouche sur l'extérieur du caisson 1 et une sortie d'air d'injection 22 qui communique avec le premier compartiment. Par « communication avec le premier compartiment 10 », on signifie que l'air passant par la sortie d'air d'injection 22 pénètre dans l'espace délimité par le premier compartiment 10. Ainsi, l'air passant par la sortie d'air d'injection 22 pénètre soit directement dans le premier compartiment 10 (premier mode de réalisation représenté en figures 1 et 2, et troisième mode de réalisation représenté en figures 5 et 6), soit pénètre par un tuyau d'admission 93 dans le moto-ventilateur 90 situé dans le premier compartiment 10 (deuxième mode de réalisation représenté en figures 3 et 4).

D'une manière générale, selon l'invention, le deuxième compartiment 20 est conformé (par la position de l'entrée d'air d'injection 21 et de la sortie d'air d'injection 22 et/ou des parois internes au deuxième compartiment 20) pour dévier le flux d'air d'injection destiné à être aspiré par le moto-ventilateur dans son trajet au travers de ce deuxième compartiment 20. Par « dévier » on entend que le flux d'air effectue au moins un changement global de direction. Cette déviation du flux d'air a pour conséquence que la vitesse de passage de ce flux dans le deuxième compartiment 20 est diminuée en dessous d'une valeur seuil où les particules, poussières de granulométrie plus importante, et autres éléments comme l'humidité, qui sont incompatibles avec le bon fonctionnement de la turbine du moto-ventilateur, sont piégées dans le deuxième compartiment 20.

En ralentissant l'air, le deuxième compartiment 20 agit comme un volume de décompression.

Les essais réalisés par les inventeurs confirment que le deuxième compartiment 20 permet de réduire la vitesse d'entrée de l'air dans le premier compartiment 10. En particulier, ces essais montrent que pour un intervalle de vitesse d'entrée d'air compris entre 1,5 m/s et 4 m/s, l'aspiration des particules et poussières par le moto-ventilateur est minimale.

Dans le premier mode de réalisation représenté en figure 1 (et en figure 2, voir ci-dessous), le deuxième compartiment 20 s'étend le long d'une paroi latérale 16 des parois latérales (16, 18) du premier compartiment 10, de telle sorte que cette paroi latérale 16 est également une paroi latérale 28 des parois latérales (26, 28) du deuxième compartiment 20, que la paroi arrière 27 du deuxième compartiment 20 prolonge la paroi arrière 17 du premier compartiment 10, et que la paroi avant 25 du deuxième compartiment 20 prolonge la paroi avant 15 du premier compartiment 10. L'entrée d'air d'injection 21 et la sortie d'air d'injection 22 du deuxième compartiment sont décalées l'une par rapport à l'autre (c'est-à-dire que l'axe A1 perpendiculaire à l'entrée d'air d'injection 21 et l'axe d'injection A2 perpendiculaire à la sortie d'air d'injection 22 sont distincts, de telle sorte que le trajet de l'air au travers du deuxième compartiment 20 n'est pas rectiligne). En conséquence, l'air entrant dans le deuxième compartiment 20 par l'entrée d'air d'injection 21 doit changer deux fois de direction avant de sortir par la sortie d'air d'injection 22 (voir flèche sur la figure 1). Ainsi, c'est le deuxième compartiment 20 (en l'espèce ses parois) qui forme une chicane pour dévier le flux d'air.

Dans le premier mode de réalisation représenté en figure 1, le deuxième compartiment 20 a une forme rectangulaire, et les axes A1 et A2 sont parallèles et distincts de telle sorte que le trajet de l'air d'injection dans le deuxième compartiment 20 est en forme de « S ».

L'entrée d'air d'injection 21 est situé dans l'autre paroi latérale 28 du deuxième compartiment 20 qui est parallèle à la paroi latérale 26 du deuxième compartiment 20 (commune avec la paroi latérale 12 du premier compartiment 10), à proximité de la paroi arrière 27 du deuxième compartiment 20. La sortie d'air d'injection 22 se situe dans la paroi latérale 26 commune, à proximité de la paroi avant 25 du deuxième compartiment 20.

Ce trajet de l'air d'injection est indiqué par des flèches noires sur la figure 2, qui est une vue de dessus et en perspective du caisson représenté en figure 1.

Avantageusement, le moto-ventilateur 90 est refroidi par de l'air provenant de l'extérieur du caisson 1 qui circule autour du moto-ventilateur 90, ce qui contribue à éviter que le moto-ventilateur 90 atteigne en fonctionnement une température trop élevée. Cet air de refroidissement suit un trajet depuis l'extérieur du caisson 1 jusqu'au moto-ventilateur 90, grâce au ventilateur 95 qui l'aspire dans le premier compartiment 10.

Dans le premier mode de réalisation décrit ci-dessus, l'air de refroidissement suit le même trajet que l'air d'injection aspiré par le moto-ventilateur 90. Ainsi, l'air de refroidissement entre dans le deuxième compartiment 20 par l'entrée d'air 21 puis pénètre dans le premier compartiment 10 par la sortie d'air 22 où il circule autour du moto-ventilateur 90. Le trajet de l'air de refroidissement dans le premier compartiment est indiqué par des flèches blanches sur la figure 2.

Cette solution présente l'avantage que la fabrication du caisson de ventilation 1 est simplifiée.

Dans un deuxième mode de réalisation du caisson selon l'invention, représenté sur les figures 3 et 4, le deuxième compartiment 20 se situe dans l'axe du premier compartiment 10 selon l'axe longitudinal X. Ainsi, la paroi arrière 17 du premier compartiment 10 forme la paroi avant 25 du deuxième compartiment 20.

Par souci de clarté, en figure 3, les parois latérales (et la paroi supérieure) du premier compartiment 10 et du deuxième compartiment 20, ainsi que le moto-ventilateur 90 et les tuyaux d'admission 93 et d'éjection 94 n'ont pas été représentés.

Le deuxième compartiment 20 comporte une chicane intérieure 30 qui est formée d'une séparation 40 qui s'étend depuis la paroi arrière 27 jusqu'à la paroi avant 25.

La séparation 40 comprend
- un plancher 41 qui s'étend depuis une première paroi latérale du deuxième compartiment 20 où sont situés les entrées d'air d'injection 21 et de refroidissement 29 en passant au-dessus de l'orifice 19 situé dans la paroi avant 25 et ouvert sur le premier compartiment 10 (voir ci-dessous). Le plancher 41 ne s'étend pas jusqu'à la seconde paroi latérale du deuxième compartiment 20 (paroi latérale opposée à la première paroi latérale) ;
- une paroi 42 qui prolonge le plancher 41 en descendant le long de la seconde paroi latérale puis en revenant vers le milieu du deuxième compartiment 20 jusqu'à rejoindre la paroi inférieure du deuxième compartiment 20.

Ainsi, la séparation 40 divise le deuxième compartiment 20 en deux passages disjoints :
- un passage supérieur qui s'étend au-dessus de l'orifice 19 puis longe la seconde paroi latérale puis débouche sur la sortie d'air d'injection 22;
- un passage inférieur qui débouche sur l'orifice 19 ouvert sur le premier compartiment 10.

L'entrée d'air d'injection 21 est située dans la première paroi latérale du deuxième compartiment 20 et débouche dans le passage supérieur du deuxième compartiment 20. La sortie d'air d'injection 22 est située sur la paroi avant 25 à l'autre extrémité du passage supérieur. La sortie d'air d'injection 22 est formée par le tuyau d'admission 93 du moto-ventilateur 90 qui traverse la paroi avant 25 et débouche dans le deuxième compartiment 20.

L'axe A1 perpendiculaire à l'entrée d'air d'injection 21 et l'axe d'injection A2 perpendiculaire à la sortie d'air d'injection 22 sont donc perpendiculaires.

Ainsi, l'air d'injection qui pénètre dans le deuxième compartiment 20 circule dans le passage supérieur, contourne l'orifice 19, descend le long de la seconde paroi latérale du deuxième compartiment 20, puis pénètre dans le tuyau d'admission 93. Ce trajet est représenté par des flèches noires sur la figure 3.

Le tuyau d'éjection 94 éjecte l'air passé dans le moto-ventilateur 90 directement à l'extérieur du caisson 1, le tuyau d'éjection 94 traversant la paroi arrière 17 du premier compartiment 10, le deuxième compartiment 20, et la paroi arrière 27 du deuxième compartiment 20.

La chicane 30 décrite ci-dessus ne représente qu'un exemple d'une chicane 30 servant à dévier et ralentir l'air d'injection en amont du moto-ventilateur 90.

Alternativement, la chicane 30 peut être constituée d'une ou plusieurs parois verticales et/ou horizontales réparties dans le deuxième compartiment 20.

Dans ce mode de réalisation, l'air de refroidissement suit un trajet différent de l'air aspiré.

L'air de refroidissement pénètre dans le deuxième compartiment 20 par une entrée secondaire 29 dans la première paroi latérale du deuxième compartiment 20 qui est distincte de l'entrée d'air d'injection 21 et située en dessous de celle-ci. Cette entrée secondaire 29 débouche dans le passage inférieur du deuxième compartiment 20.

Ainsi, l'air de refroidissement qui pénètre dans le deuxième compartiment 20 circule dans le passage inférieur et pénètre dans le premier compartiment 10 par l'orifice 19 dans la paroi arrière 17 du premier compartiment 10 (et la paroi avant 25 du deuxième compartiment 20), cet orifice 19 étant aligné avec l'axe X. Aspiré par le ventilateur 95 situé en face de l'orifice 19, l'air de refroidissement circule autour du moto-ventilateur 90, puis sort du premier compartiment 10 par un orifice (non-représenté) dans la paroi avant 15 du premier compartiment 10. Ce trajet de l'air de refroidissement est représenté par des flèches blanches en figure 3.

L'avantage présenté par des entrées d'air d'injection 21 et d'air de refroidissement 29 séparées est que le moto-ventilateur 90 ne risque pas aspirer d'air destiné au refroidissement, en conséquence le risque d'encrassement du moteur 91 à long terme est diminué.

Un troisième mode de réalisation du caisson de ventilation 1 selon l'invention est représenté en figures 5 et 6.

La figure 5 est une vue de dessus et la figure 6 une vue de côté du caisson de ventilation 1.

Le deuxième compartiment 20 se situe dans l'axe du premier compartiment 10 selon l'axe longitudinal X. Ainsi, la paroi arrière 17 du premier compartiment 10 forme la paroi avant 25 du deuxième compartiment 20.

L'entrée d'air d'injection 21 est située dans le plancher 23 du deuxième compartiment 20, et la sortie d'air d'injection 22 est situé sur la paroi avant 25. La sortie d'air d'injection 22 est formée par un orifice 19 dans paroi avant 25 du deuxième compartiment 20 (qui est la paroi arrière 17 du premier compartiment 10), cet orifice 19 étant aligné avec l'axe X.

L'axe A1 perpendiculaire à l'entrée d'air d'injection 21 et l'axe d'injection A2 perpendiculaire à la sortie d'air d'injection 22 sont donc perpendiculaires.

Le tuyau d'admission 93 du moto-ventilateur 90 est situé dans le premier compartiment 10, et l'entrée de ce tuyau d'admission 93 est située en dessous et sur le côté par rapport à l'orifice 19.

Ainsi, l'air d'injection qui pénètre dans le deuxième compartiment 20 par le plancher 23 effectue un coude pour passer par l'orifice 19, puis deux autres coudes pour accéder au tuyau d'admission 93. Ce trajet est représenté par des flèches noires.

Le tuyau d'éjection 94 du moto-ventilateur 90 éjecte l'air passé dans le moto-ventilateur 90 directement à l'extérieur du caisson 1, le tuyau d'éjection 94 traversant la paroi arrière 17 du premier compartiment 10 et longeant l'extérieur du deuxième compartiment 20.

L'air de refroidissement suit le même trajet que l'air d'injection au travers du deuxième compartiment 20 jusqu'à l'orifice 19. Aspiré par le ventilateur 95 situé en face de l'orifice 19, l'air de refroidissement circule autour du moto-ventilateur 90, puis sort du premier compartiment 10 par un orifice 151 dans la paroi avant 15 du premier compartiment 10. Ce trajet de l'air de refroidissement est représenté par des flèches blanches.

Dans le premier mode et le troisième mode de réalisation décrits ci-dessus, et dans d'autres modes de réalisation de l'invention, le deuxième compartiment 20 peut en option comporter une ou plusieurs parois qui dévient l'air d'injection en plus de la déviation imposée par la position décalée de l'entrée d'air d'injection 21 et de la sortie d'air d'injection 22.

Avantageusement, le caisson 1 est muni d'un dispositif de variation de vitesse (variation de fréquence) 50 du moteur 92.

Ce dispositif de variation de vitesse 50 comporte un variateur relié au moteur, des capteurs qui mesurent le débit d'air, et un module (automate) de calcul auquel sont reliés ces capteurs, ce module étant apte à commander le variateur en fonction des données transmises par les capteurs, le variateur étant apte à faire varier la vitesse du moteur.

Ce dispositif de variation de vitesse 50 est représenté par un boitier visible sur la figure 5 et la figure 6. Dans ce cas, le dispositif de variation de vitesse 50 est situé à l'intérieur du caisson 1.

Avantageusement, le dispositif de variation de vitesse 50 du moteur 92 est situé à l'extérieur du caisson 1.

Ainsi, la maintenance du dispositif de variation de vitesse 50 est facilitée, puisqu'une ouverture du caisson n'est pas nécessaire.

Par exemple, le dispositif de variation de vitesse 50 est fixé sur une des parois extérieures du caisson 1.

En variante, le dispositif de variation de vitesse 50 comporte un boitier qui contient le variateur, et un coffret électrique qui contient les capteurs et l'automate de calcul, le boitier étant situé à l'intérieur ou à l'extérieur du caisson 1, et le coffret électrique étant situé à l'extérieur, à distance du caisson 1.

Dans la description ci-dessus, le caisson 1 ne comporte pas de filtres situés sur le trajet du flux d'air d'injection.

Ainsi, la fabrication du caisson 1 est facilitée.

Alternativement, un (ou plusieurs) filtre est situé sur le trajet de l'air d'injection. Par exemple, dans l'exemple de la figure 1, un filtre est situé au niveau de la sortie d'air d'injection 22.

Un filtre permet de diminuer encore davantage l'entrée de particules dans le moto-ventilateur 90, sachant qu'en tout état de cause, le deuxième compartiment 20 bloque suffisamment de particules et poussières pour s'affranchir de la nécessité de la maintenance du filtre.

## Revendications

1. Caisson de ventilation (1) comportant un moto-ventilateur (90) qui comprend un moteur (91) et une turbine (92) entrainée par ce moteur (91), un premier compartiment (10) destiné à recevoir ledit moto-ventilateur (90) apte à aspirer de l'air extérieur au caisson (1), ledit caisson (1) étant **caractérisé en ce qu'**il comporte en outre et un ventilateur (95) fixé sur l'arbre de rotation dudit moteur (91) et situé en amont du moto-ventilateur (90), et un deuxième compartiment (20) en amont dudit premier compartiment (10) et séparé dudit premier compartiment (10) et comportant une entrée d'air (21) débouchant sur l'extérieur du caisson (1) et une sortie d'air (22) communiquant avec ledit premier compartiment (10), ledit deuxième compartiment (20) étant conformé pour dévier le flux d'air destiné à être aspiré par ledit moto-ventilateur (90) dans son trajet au travers dudit deuxième compartiment (20) entre ladite entrée d'air (21) et ladite sortie d'air (22), ledit ventilateur (95) servant à aspirer de l'air provenant de l'extérieur pour l'amener dans le premier compartiment (10).

2. Caisson de ventilation (1) selon la revendication 1 **caractérisé en ce que** ledit deuxième compartiment (20) comporte une chicane intérieure (30) qui est disposée pour réaliser ladite déviation dudit flux d'air dans son trajet au travers dudit deuxième compartiment (20).

3. Caisson de ventilation (1) selon la revendication 1 ou 2 **caractérisé en ce que** ladite entrée d'air (21) et ladite sortie d'air (22) dudit deuxième compartiment (20) sont disposées de telle sorte que ledit deuxième compartiment (20) forme une chicane qui réalise une déviation dudit flux d'air dans son trajet au travers dudit deuxième compartiment (20).

4. Caisson de ventilation (1) selon l'une quelconque des revendications 1 à 3 **caractérisé en ce qu'**il comporte en outre un dispositif de variation de fréquence (50) du moteur (91) dudit moto-ventilateur (90).

5. Caisson de ventilation (1) selon la revendication 4, **caractérisé en ce que** ledit dispositif de variation de fréquence (50) est situé à l'extérieur dudit caisson (1).

6. Caisson de ventilation (1) selon l'une quelconque des revendications précédentes, **caractérisé en ce qu'**il est exempt de filtre amovible en amont dudit moto-ventilateur (90) sur le trajet dudit flux d'air.
